# EUROPÄISCHE PATENTANMELDUNG

(11) **EP 1 734 689 A1**
(43) Veröffentlichungstag der Anmeldung: **20.12.2006**
(21) Anmeldenummer: 05013049.1
(22) Anmeldetag: 16.06.2005
(51) Int. Cl.: H04L 12/24

(54) **Veto-Operation für ein Managementsystem mit einer Multi-Manager-Konfiguration**

(71) Anmelder: SIEMENS AKTIENGESELLSCHAFT, 80333 München (DE)
(72) Erfinder: Pollakowski, Olaf, Dr., 10629 Berlin (DE); Suerbaum, Clemens, 81371 München (DE)

(57) **Zusammenfassung**

Die Erfindung betrifft ein Verfahren zum Betreiben eines Managementsystems, welches zumindest einen Agenten (OMC) und einen ersten mit dem Agenten (OMC) verbundenen Manager (NMC1) und einen zweiten mit dem Agenten (OMC) verbundenen Manager (NMC2) umfasst. Der Agent (OMC) empfängt von dem ersten Manager (NMC1) eine Aufforderung (OperationRequest) zur Durchführung einer Operation. Erfindungsgemäß sendet der Agent (OMC) an den zweiten Manager (NMC2) eine Benachrichtigung (notifyOperationRequested) mit Informationen über die Operation. Im Anschluss empfängt der Agent (OMC) von dem zweiten Manager (NMC2) eine Antwortnachricht (acceptOperation, objectOperation) mit einer Zustimmung oder einer Ablehnung der Operation. Weiterhin betrifft die Erfindung ein Verfahren, bei dem der Agent (OMC) von dem zweiten Manager (NMC2) eine Nachricht empfängt zur Anforderung von Informationen über Operationen, zu deren Durchführung der erste Manager (NMC1) den Agenten (OMC) auffordert.

## Beschreibung

Die Erfindung betrifft Verfahren zum Betreiben eines Managementsystems, welches zumindest einen Agenten und einen ersten mit dem Agenten verbundenen Manager und einen zweiten mit dem Agenten verbundenen Manager umfasst. Weiterhin betrifft die Erfindung Manager und Agenten zur Durchführung des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Bei einer Multi-Manager Konfiguration ist ein Agent mit einer Mehrzahl von Managern verbunden. Die mehreren Manager können hierbei verschiedene Funktionen hinsichtlich der Steuerung des Agenten bzw. der Überwachung des gemanagten Systems wahrnehmen. Durch die Einwirkung mehrerer Manager auf den gleichen Agenten können jedoch, z.B. im Grenzbereich zwischen den Zuständigkeiten verschiedener Manager, Konflikte entstehen.

Der Erfindung liegt die Aufgabe zugrunde, effiziente Verfahren zum Betreiben eines Managementsystems aufzuzeigen, welches zumindest einen Agenten und einen ersten mit dem Agenten verbundenen Manager und einen zweiten mit dem Agenten verbundenen Manager umfasst. Weiterhin sollen Vorrichtungen zur Durchführung der Verfahren vorgestellt werden.

Diese Aufgabe wird durch ein Verfahren mit den Merkmalen des Anspruchs 1, sowie durch Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Managementsystems empfängt der Agent von dem ersten Manager eine Aufforderung zur Durchführung einer Operation. Der Agent sendet an den zweiten Manager eine Benachrichtigung mit Informationen über die Operation, und empfängt im Anschluss von dem zweiten Manager eine Antwortnachricht mit einer Zustimmung oder einer Ablehnung der Operation.

Bei dem von dem Managementsystem gemanagten System handelt es vorzugsweise um ein Telekommunikationssystem, wie z.B. ein Mobilfunkkommunikationssystem, in welchem Fall es sich bei dem Agenten um ein Betriebs- und Wartungszentrum und bei den beiden Managern um Netzwerkmanagementzentren handeln kann. Die beiden Manager wirken auf den gleichen Agenten ein. Vorzugsweise existiert keine direkte Verbindung zwischen den beiden Managern, so dass diese lediglich durch Vermittlung des Agenten miteinander kommunizieren können.

Der erste Manager fordert den Agenten zur Durchführung einer Operation auf. Die Durchführung einer Operation beeinflusst das Verhalten eines Netzelementes, wie z.B. des Agenten oder von dem Agenten untergeordneten Agenten, oder eines Datenbestandes. Beispiele für Operationen sind die Operation "CREATE log", welche einen Speicher für das Aufzeichnen von Vorkommnissen einrichtet, "listAvailableFiles", welche Daten auflistet, die bestimmte Kriterien erfüllen, "DELETENodeBFunction", welche die NodeB Funktionalität entfernt, "SETadministrativeState of utranCell", welche die bestimmte Ressourcen abschaltet.

Der zweite Manager wird über diese Operation informiert, ihm wird hierdurch die Gelegenheit gegeben, sich zu der Operation zu äußern. Die Äußerung des zweiten Managers kann zustimmend oder ablehnend sein. Die Entscheidung über die Art der Äußerung wird von dem zweiten Manager oder einer mit dem zweiten Manager verbundenen Einrichtung des Managementsystems getroffen, hierbei kann neben der konkreten Ausgestaltung der von dem ersten Manager geforderten Operation die Auswirkung der von dem ersten Manager geforderten Operation auf den Verantwortungsbereich des zweiten Managers berücksichtigt werden.

In Weiterbildung der Erfindung sendet der Agent die Benachrichtigung mit Informationen über die Operation vor Durchführung der Operation an den zweiten Manager. Bei dieser Vorgehensweise kann die Durchführung der Operation davon abhängig gemacht werden, ob sich der zweite Manager zustimmend oder ablehnend auf die Benachrichtigung hin äußert.

Besonders vorteilhaft ist es, wenn der Agent eine Antwortnachricht mit einer Zustimmung empfängt und daraufhin die Operation durchführt. Alternativ zum Empfang der Antwortnachricht mit einer Zustimmung kann der Agent die Operation durchführen, wenn er anstelle einer Antwortnachricht innerhalb einer bestimmten Zeitspanne nach Versendung der Benachrichtigung keine Antwortnachricht empfängt. Der Empfang keiner Antwortnachricht innerhalb einer bestimmten Zeitspanne auf die Benachrichtigung hin, d.h. keiner zustimmenden oder ablehnenden Äußerung des zweiten Managers, kann von dem Agenten als Zustimmung gewertet werden. In diesem Fall wird die Zeitspanne, welche dem zweiten Manager zur Abgabe einer ablehnenden oder zustimmenden Antwortnachricht zur Verfügung steht, vorzugsweise in der Benachrichtigung angegeben.

Es ist vorteilhaft, wenn der Agent den ersten und den zweiten Manager über die Durchführung der Operation informiert. Diese Information kann den Abschluss des Widerspruchsverfahrens markieren.

In Ausgestaltung der Erfindung empfängt der Agent eine Antwortnachricht mit einer Ablehnung und unterlässt daraufhin die Durchführung der Operation. Alternativ zum Empfang der Antwortnachricht mit einer Ablehnung kann der Agent die Operation unterlassen, wenn er anstelle einer Antwortnachricht innerhalb einer bestimmten Zeitspanne nach Versendung der Benachrichtigung keine Antwortnachricht empfängt. Der Empfang keiner Antwortnachricht innerhalb einer bestimmten Zeitspanne auf die Benachrichtigung hin, d.h. keiner zustimmenden oder ablehnenden Äußerung des zweiten Managers, kann von dem Agenten als Ablehnung gewertet werden. In diesem Fall wird die Zeitspanne, welche dem zweiten Manager zur Abgabe einer ablehnenden oder zustimmenden Antwortnachricht zur Verfügung steht, vorzugsweise in der Benachrichtigung angegeben.

Vorteilhafterweise informiert der Agent den ersten Manager über die Antwortnachricht mit der Ablehnung. Die Nachricht mit der Information über die Ablehnung enthält vorzugsweise weiterhin eine Angabe des ablehnenden Managers und gegebenenfalls weitere in der Antwortnachricht enthaltene Informationen.

In Weiterbildung der Erfindung sendet der Agent die Benachrichtigung mit Informationen über die Operation nach Durchführung der Operation an den zweiten Manager. Hierbei kann die Durchführung der Operation nicht mehr von der Zustimmung oder Ablehnung des zweiten Managers abhängig gemacht werden. Die Operation kann jedoch bei einer Ablehnung durch den zweiten Manager rückgängig gemacht werden.

In Ausgestaltung der Erfindung empfängt der Agent eine Antwortnachricht mit einer Ablehnung, woraufhin die Operation rückgängig gemacht wird. Alternativ zum Empfang der Antwortnachricht mit einer Ablehnung kann die Operation rückgängig gemacht werden, wenn der Agent anstelle einer Antwortnachricht innerhalb einer bestimmten Zeitspanne nach Versendung der Benachrichtigung keine Antwortnachricht empfängt. Der Empfang keiner Antwortnachricht innerhalb einer bestimmten Zeitspanne auf die Benachrichtigung hin, d.h. keiner zustimmenden oder ablehnenden Äußerung des zweiten Managers, kann von dem Agenten als Ablehnung gewertet werden. In diesem Fall wird die Zeitspanne, welche dem zweiten Manager zur Abgabe einer ablehnenden oder zustimmenden Antwortnachricht zur Verfügung steht, vorzugsweise in der Benachrichtigung angegeben. Die Operation kann je nach der konkreten Ausgestaltung der Operation rückgängig gemacht werden von dem Agent, von dem ersten oder dem zweiten Manager. Vorzugsweise enthält die Antwortnachricht mit der Ablehnung Informationen darüber, durch wen die Operation rückgängig zu machen ist.

In Ausgestaltung der Erfindung umfasst die Antwortnachricht mit der Ablehnung Angaben zu mindestens einer von dem ersten Manager anstelle der Operation verwendbaren Operation. Hierdurch kann der zweite Manager eine Operation vorschlagen, in Bezug auf welche er keine Ablehnung äußern würde. Bei dieser alternativen Operation kann es sich z.B. um eine leichte Modifikation der abgelehnten Operation handeln, bei welcher beispielsweise ein Parameterwert verändert wurde.

Mit Vorzug umfasst die Aufforderung zur Durchführung der Operation Informationen darüber, ob die Benachrichtigung mit Informationen über die Operation vor oder nach der Durchführung der Operation zu senden ist. Hierbei kann die Dringlichkeit der Durchführung einer Operation berücksichtigt werden, denn durch die erfindungsgemäße Veto-Prozedur wird die Durchführung der betroffenen Operation zumindest verschoben. Zusätzlich oder alternativ kann die Aufforderung zur Durchführung der Operation Informationen darüber umfassen, ob keine Versendung einer Antwortnachricht durch den zweiten Manager von dem Agenten als Zustimmung oder Ablehnung zu werten ist.

Gemäß einem weiteren erfindungsgemäßen Verfahren empfängt der zweite Manager von dem Agenten eine Benachrichtigung mit Informationen über eine Operation, zu deren Durchführung der erste Manager den Agenten zuvor aufgefordert hat. Im Anschluss sendet der zweite Manager eine Antwortnachricht mit einer Zustimmung oder einer Ablehnung der Operation an den Agenten.

Vorteilhafterweise kann der zweite Manager eine Antwortnachricht mit einer Ablehnung senden mit Informationen darüber, durch wen die Operation rückgängig zu machen ist. In diesem Fall ist die Durchführung der Operation bereits erfolgt, und bei einer Ablehnung durch den zweiten Manager kann diese rückgängig gemacht werden. Die Operation kann je nach konkreter Ausgestaltung der Operation rückgängig gemacht werden von dem Agent, von dem ersten oder dem zweiten Manager.

Weiterhin ist es vorteilhaft, wenn der zweite Manager eine Antwortnachricht sendet mit einer Ablehnung und mit Angaben zu mindestens einer von dem ersten Manager anstelle der Operation verwendbaren Operation. Hierdurch kann der zweite Manager eine Operation vorschlagen, in Bezug auf welche er keine Ablehnung äußern würde. Bei dieser alternativen Operation kann es sich z.B. um eine leichte Modifikation der abgelehnten Operation handeln, bei welcher beispielsweise ein Parameterwert verändert wurde.

Einer Ausgestaltung der Erfindung gemäß sendet der zweite Manager eine Antwortnachricht mit einer Zustimmung, und im Anschluss empfängt er eine Nachricht zur Information über die Durchführung der Operation von dem Agenten.

Bei einem weiteren erfindungsgemäßen Verfahren empfängt der Agent von dem ersten Manager eine Nachricht zur Anforderung von Informationen über Operationen, zu deren Durchführung ein weiterer Manager den Agenten auffordert. Bei einem weiteren erfindungsgemäßen Verfahren sendet der erste Manager an den Agenten eine Nachricht zur Anforderung von Informationen über Operationen, zu deren Durchführung ein weiterer Manager den Agenten auffordert.

Bei der Nachricht zur Anforderung kann es sich um eine erstmalige Anforderung, d.h. um eine Neu-Subskription in Bezug auf die Informationen über von einem anderen Manager angeforderte Operationen handeln, oder im Fall, dass zuvor bereits eine derartige Anforderung von dem ersten Manager an den Agenten ergangen ist, um eine Änderung oder Löschung einer bestehenden Subskription.

Mit Vorzug umfasst die Nachricht eine Angabe einer oder mehrerer Operationsarten, auf welche sich die Anforderung von Informationen bezieht. Zusätzlich oder alternativ kann die Nachricht eine Angabe einer oder mehrerer der weiteren Manager umfassen, wobei sich die Anforderung von Informationen auf Operationen bezieht, zu deren Durchführung dieser oder diese weiteren Manager den Agenten auffordern. Zusätzlich oder alternativ kann die Nachricht eine Angabe einer oder mehrerer Einrichtungen und/oder Daten umfassen, wobei sich die Anforderung von Informationen auf Operationen bezieht, welche diese Einrichtungen und/oder Daten betreffen. Durch die Angabe von Operationsart und/oder aufforderndem Manager und/oder betroffener Einrichtung und/oder Daten wird die Anzahl von Operationen, betreffend welche der erste Manager von dem Agenten informiert wird, eingeschränkt. Hierdurch werden überflüssige Versendungen von Nachrichten von dem Agent zu dem ersten Manager vermieden, da der erste Manager nur über diejenigen von weiteren Managern angeforderten Operationen informiert wird, welche ihn betreffen.

Die erfindungsgemäßen Manager und Agenten eignen sich insbesondere zur Durchführung der jeweiligen erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementsystem,
- Figur 2:: ein erstes Ablaufdiagramm eines erfindungsgemäßen Verfahrens,
- Figur 3:: ein zweites Ablaufdiagramm eines erfindungsgemäßen Verfahrens,
- Figur 4:: ein drittes Ablaufdiagramm eines erfindungsgemäßen Verfahrens.

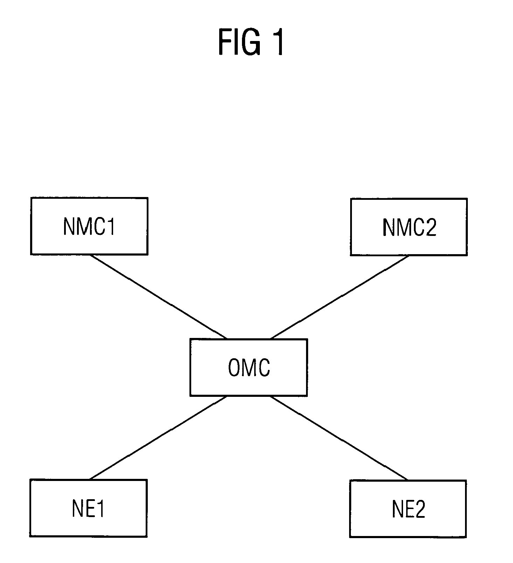

Der in Figur 1 dargestellte Ausschnitt aus einem Managementsystem umfasst die Netzwerkmanagementzentren NMC1 und NMC2, welche jeweils als Manager gegenüber dem Betriebs- und Wartungszentrum OMC fungieren. Das Betriebs- und Wartungszentrum OMC agiert als Manager gegenüber den Netzelementen NE1 und NE2. Das Managementsystem kann weitere in Figur 1 nicht dargestellte Bestandteile umfassen. Bei dem betrachteten Managementsystem handelt es sich vorzugsweise um ein Managementsystem eines Mobilfunkkommunikationssystems, z.B. eines Systems nach dem Standard UMTS. Bei UMTS wird die Schnittstelle zwischen den Netzwerkmanagementzentren NMC1 und NMC2 und dem Betriebs- und Wartungszentrum OMC als Itf-N Schnittstelle bezeichnet.

Gemäß der Konstellation der Figur 1 greifen mehrere Netzwerkmanagementzentren NMC1 und NMC2 als Manager auf das Betriebs-und Wartungszentrum OMC zu. Hierbei kann es zu Konflikten zwischen den Interessen der Netzwerkmanagementzentren NMC1 und NMC2 kommen, z.B. dann, wenn das Netzwerkmanagementzentrum NMC1 eine Operation an das Betriebs- und Wartungszentrum OMC sendet, deren Durchführung zu Schwierigkeiten bei dem Netzwerkmanagementzentrum NMC2 führen würde. Im folgenden wird ein Verfahren vorgestellt, welches derartige Konflikte vermeidet bzw. die Auswirkungen derartiger Konflikte vermindert.

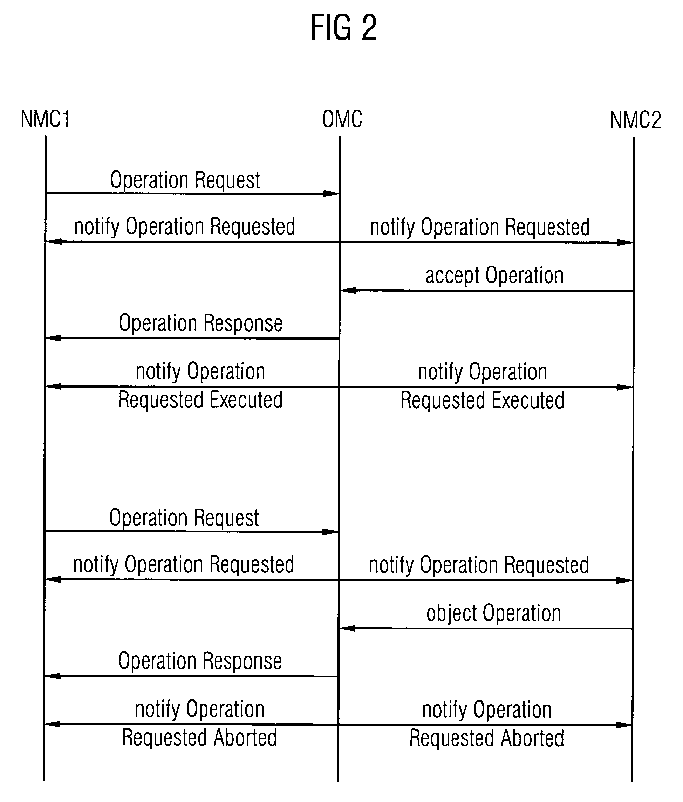

Figur 2 zeigt einen ersten Verfahrensablauf zum erfindungsgemäßen Verfahren, wobei die Abfolge der zwischen dem Netzwerkmanagementzentrum NMC1 und dem Betriebs- und Wartungszentrum OMC, sowie der zwischen dem Netzwerkmanagementzentrum NMC2 und dem Betriebs- und Wartungszentrum OMC versendeten Nachrichten dargestellt ist. Zu Beginn sendet das Netzwerkmanagementzentrum NMC1 eine Nachricht OperationRequest an das Betriebs- und Wartungszentrum OMC, mit welchem das Betriebs-und Wartungszentrum OMC zur Durchführung einer in der Nachricht OperationRequest indizierten Operation aufgefordert wird. Die Nachricht OperationRequest beinhaltet einen Parameter, welcher in den im Rahmen der folgenden Veto-Prozedur versendeten Nachrichten als Bezug auf die von dem Netzwerkmanagementzentrum NMC1 angeforderte Operation verwendet werden kann, d.h. Identifikationsinformationen der geforderten Operation.

Nach Empfang der Nachricht OperationRequest sendet das Betriebs- und Wartungszentrum OMC die Nachricht notifyOperationRequested an die beiden Netzwerkmanagementzentren NMC1 und NMC2. Durch die Nachricht notifyOperationRequested wird das Netzwerkmanagementzentrum NMC2 darüber informiert, dass das Netzwerkmanagementzentrum NMC1 die Durchführung der in der Nachricht OperationRequest spezifizierten Operation gefordert hat. Hierzu enthält die Nachricht notifyOperationRequested Identifikationsinformationen des Netzwerkmanagementzentrums NMC1, Identifikationsinformationen der angeforderten Operation, und eine Kopie der Aufforderung, welche von dem Netzwerkmanagementzentrum NMC1 an das Betriebs- und Wartungszentrum OMC gesendet wurde. Die Nachricht notifyOperationRequested dient dem Start der im folgenden beschriebenen Veto-Prozedur, bei welcher dem Netzwerkmanagementzentrum NMC2 die Möglichkeit gegeben wird, auf die Nachricht notifyOperationRequested hin Stellung zur Durchführung der von dem Netzwerkmanagementzentrum NMC1 geforderten Operation zu nehmen. Die Nachricht notifyOperationRequested wird von dem Betriebs- und Wartungszentrum OMC auch an das Netzwerkmanagementzentrum NMC1 gesendet, womit das Netzwerkmanagementzentrum NMC1 darüber informiert wird, dass die Veto-Prozedur gestartet wurde.

Das Netzwerkmanagementzentrum NMC2 kann auf den Empfang der Nachricht notifyOperationRequested hin entscheiden, dass es mit der Durchführung der Operation einverstanden ist, in welchem Fall eine Nachricht acceptOperation von dem Netzwerkmanagementzentrum NMC2 an das Betriebs- und Wartungszentrum OMC gesendet wird. Alternativ kann das Netzwerkmanagementzentrum NMC2 entscheiden, dass es mit der Durchführung der Operation nicht einverstanden ist, in welchem Fall eine Nachricht objectOperation von dem Netzwerkmanagementzentrum NMC2 an das Betriebs- und Wartungszentrum OMC gesendet wird. Der Fall des Einverständnisses ist im oberen Teil der Figur 2, der Fall der Ablehnung im unteren Teil der Figur 2 dargestellt.

Gemäß dem oberen Teil der Figur 2 sendet das Netzwerkmanagementzentrum NMC2 die Nachricht acceptOperation an das Betriebs- und Wartungszentrum OMC. Die Nachricht acceptOperation enthält Identifikationsinformationen des Netzwerkmanagementzentrums NMC2 und Identifikationsinformationen der Operation, welcher das Netzwerkmanagementzentrum NMC2 zustimmt. Daraufhin führt das Betriebs- und Wartungszentrum OMC die von dem Netzwerkmanagementzentrum NMC1 geforderte Operation durch. Alternativ zum Empfang der Nachricht acceptOperation kann das Betriebs- und Wartungszentrum OMC die Operation auch dann durchführen, wenn es nach Ablauf einer bestimmten Zeitspanne nach Versendung der Nachricht notifyOperationRequested keine Antwort von dem Netzwerkmanagementzentrum NMC2 empfangen hat. Diese Zeitspanne ist vorzugsweise in der Nachricht notifyOperationRequested angegeben. Das Betriebs- und Wartungszentrum OMC kann, in Figur 2 nicht dargestellt, dem Netzwerkmanagementzentrum NMC2 eine Antwort auf die Nachricht acceptOperation mit einer die Nachricht acceptOperation betreffenden Statusinformation wie z.B. "erfolgreich", "falsche Identifikationsinformation der Operation" usw. senden.

Nach der Durchführung der Operation sendet das Betriebs- und Wartungszentrum OMC eine Nachricht OperationResponse an das Netzwerkmanagementzentrum NMC1. Die Nachricht OperationResponse enthält die Information, dass der Status der Operation erfolgreich ist, falls bei der Durchführung der Operation keine Probleme auftraten. Schließlich sendet das Betriebs-und Wartungszentrum OMC die Nachricht notifyOperationRequestedExecuted an die beiden Netzwerkmanagementzentren NMC1 und NMC2, durch welche mitgeteilt wird, dass die Operation, auf welche sich die Veto-Prozedur bezogen hat, durchgeführt wurde. Die Nachricht notifyOperationRequestedExecuted dient somit dem Abschluss der Veto-Prozedur.

Gemäß dem unteren Teil der Figur 2 sendet das Netzwerkmanagementzentrum NMC2 auf den Empfang der Nachricht notifyOperationRequested hin die Nachricht objectOperation an das Betriebs- und Wartungszentrum OMC. Die Nachricht objectOperation enthält neben Identifikationsinformationen des Netzwerkmanagementzentrums NMC2 und Identifikationsinformationen der Operation einen von dem Netzwerkmanagementzentrum NMC2 gesetzten Parameter, welcher anzeigt, dass die Operation nicht durchzuführen ist. Es ist möglich, dass die Nachricht objectOperation eine oder mehrere Alternativen zu der Operation angibt, gegen welche das Netzwerkmanagementzentrum NMC2 keinen Widerspruch erheben würde, wie z.B. einen für das Netzwerkmanagementzentrum NMC2 akzeptablen Bereich von Werten für einen Parameter der Operation. Das Betriebs- und Wartungszentrum OMC kann, in Figur 2 nicht dargestellt, auf die Nachricht objectOperation hin eine Antwortnachricht an das Netzwerkmanagementzentrum NMC2 senden mit einer die Nachricht objectOperation betreffenden Statusangabe wie z.B. "erfolgreich", "Nichtdurchführen der Operation nicht möglich", "Frist zum Einlegen des Widerspruchs verpasst" usw.

Nach dem Empfang der Nachricht objectOperation führt das Betriebs- und Wartungszentrum OMC die Operation nicht aus. Es wird die Nachricht OperationResponse von dem Betriebs- und Wartungszentrum OMC an das Netzwerkmanagementzentrum NMC1 gesendet, mit welchem das Netzwerkmanagementzentrum NMC1 informiert wird, dass die Operation nicht durchgeführt wurde bzw. dass der Status der Operation "fehlgeschlagen" lautet. Die Nachricht OperationResponse kann gegebenenfalls die Information enthalten, dass die Operation aufgrund eines Vetos des Netzwerkmanagementzentrums NMC2 nicht ausgeführt wurde.

Weiterhin sendet das Betriebs- und Wartungszentrum OMC eine Nachricht notifyOperationRequestedAborted an die beiden Netzwerkmanagementzentren NMC1 und NMC2. Mittels der Nachricht notifyOperationRequestedAborted werden die Netzwerkmanagementzentren NMC1 und NMC2 darüber informiert, dass die von dem Netzwerkmanagementzentrum NMC1 angeforderte Operation nicht durchgeführt wurde. Auch die Nachricht notifyOperationRequestedAborted kann Information darüber enthalten, dass die Operation aufgrund eines Vetos des Netzwerkmanagementzentrums NMC2 nicht ausgeführt wurde. Weiterhin können die gegebenenfalls in der Nachricht objectOperation enthaltenen von dem Netzwerkmanagementzentrum NMC2 vorgeschlagenen Alternativen in der Nachricht notifyOperationRequestedAborted aufgezählt werden. Die Nachricht notifyOperationRequestedAborted dient dem Abschluss der Veto-Prozedur.

Der in Figur 2 dargestellte Verfahrensablauf entspricht einer synchronen Handhabung der Veto-Prozedur. Hierbei wird vor der Durchführung der angeforderten Operation gewartet, bis andere Manager ihre Zustimmung erteilen. Alternativ zur expliziten Zustimmung kann der Ablauf einer bestimmten Zeitspanne, welche für eine Ablehnung zur Verfügung steht, verwendet werden. Ob von einer implizite Zustimmung oder Ablehnung ausgegangen werden darf, wenn das Netzwerkmanagementzentrum NMC2 keine Nachricht objectOperation oder acceptoperation sendet, kann z.B. von dem Netzwerkmanagementzentrum NMC1 in der Nachricht OperationRequest vorgegeben werden.

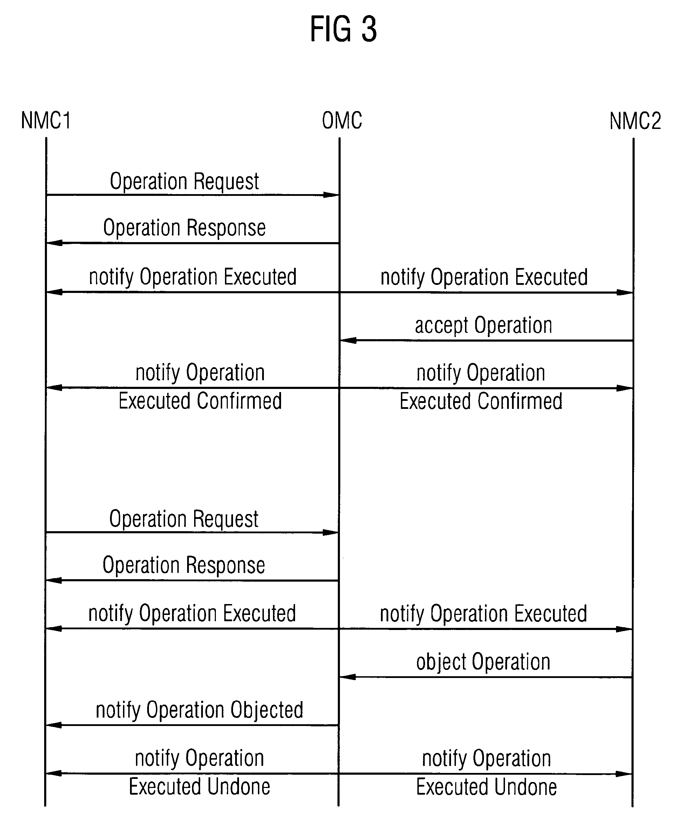

Ein alternativer Verfahrensablauf der asynchronen Handhabung der Veto-Prozedur ist in Figur 3 dargestellt. Wie auch in Figur 2 stellt Figur 3 die Abfolge der zwischen dem Netzwerkmanagementzentrum NMC1 und dem Betriebs- und Wartungszentrum OMC, sowie der zwischen dem Netzwerkmanagementzentrum NMC2 und dem Betriebs- und Wartungszentrum OMC versendeten Nachrichten dar. Zu Beginn sendet das Netzwerkmanagementzentrum NMC1 die Nachricht OperationRequest an das Betriebs- und Wartungszentrum OMC, mit welchem das Betriebs- und Wartungszentrum OMC zur Durchführung einer in der Nachricht OperationRequest indizierten Operation aufgefordert wird. Die Nachricht OperationRequest beinhaltet einen Parameter, welcher in den im Rahmen der folgendenVeto-Prozedur versendeten Nachrichten als Bezug auf die von dem Netzwerkmanagementzentrum NMC1 angeforderte Operation verwendet werden kann, d.h. Identifikationsinformationen der Operation. Nach Empfang der Nachricht OperationRequest führt das Betriebs- und Wartungszentrum OMC die geforderte Operation durch und informiert das Netzwerkmanagementzentrum NMC1 mittels der Nachricht OperationResponse mit der Statusangabe "erfolgreich" über die erfolgreiche Durchführung der Operation.

Im Anschluss sendet das Betriebs- und Wartungszentrum OMC die Nachricht notifyOperationExecuted an die beiden Netzwerkmanagementzentren NMC1 und NMC2. Für das Netzwerkmanagementzentrum NMC2 dient die Nachricht notifyOperationExecuted der Information, dass die in der Nachricht OperationRequest geforderte Operation durchgeführt wurde, in Bezug auf welche eine Veto-Operation stattfindet. Hierzu enthält die Nachricht notifyOperationRequested Identifikationsinformationen des Netzwerkmanagementzentrums NMC1, Identifikationsinformationen der durchgeführten Operation, und eine Kopie der Anforderung der Operation, welche von dem Netzwerkmanagementzentrum NMC1 an das Betriebs- und Wartungszentrum OMC gesendet wurde. Die Nachricht notifyOperationExecuted startet somit die Veto-Prozedur. Das Netzwerkmanagementzentrum NMC1 wird mittels der Nachricht notifyOperationExecuted über den Start der Veto-Prozedur informiert.

Wie bereits in Bezug auf Figur 2 erläutert, hat das Netzwerkmanagementzentrum NMC2 die Möglichkeit, bei Einverständnis mit der Durchführung der Operation die Nachricht acceptOperation und bei Ablehnung gegenüber der Durchführung der Operation die Nachricht objectOperation zu senden. Alternativ zur expliziten Zustimmung durch die Nachricht acceptOperation kann der Ablauf einer bestimmten Zeitspanne gewertet werden, welche dem Netzwerkmanagementzentrum NMC2 zur Erklärung des Nichteinverständnisses zur Verfügung steht. Diese Zeitspanne ist vorzugsweise in der Nachricht notifyOperationExecuted angegeben. Ob von einer implizite Zustimmung oder Ablehnung ausgegangen werden darf, wenn das Netzwerkmanagementzentrum NMC2 keine Nachricht objectOperation oder acceptoperation sendet, kann z.B. von dem Netzwerkmanagementzentrum NMC1 in der Nachricht OperationRequest vorgegeben werden.

Gemäß dem oberen Teil der Figur 3 sendet das Netzwerkmanagementzentrum NMC2 die Nachricht acceptOperation an das Betriebs- und Wartungszentrum OMC. Die Nachricht acceptOperation enthält Identifikationsinformationen des Netzwerkmanagementzentrums NMC2 und Identifikationsinformationen der Operation, welcher das Netzwerkmanagementzentrum NMC2 zustimmt. Das Betriebs- und Wartungszentrum OMC kann, in Figur 3 nicht dargestellt, dem Netzwerkmanagementzentrum NMC2 eine Antwort auf die Nachricht acceptOperation mit einer die Nachricht acceptOperation betreffende Statusinformation wie z.B. "erfolgreich", "falsche Identifikationsinformation der Operation" usw. senden.

Weiterhin sendet das Betriebs- und Wartungszentrum OMC die Nachricht notifyOperationExecutedConfirmed zu den beiden Netzwerkmanagementzentren NMC1 und NMC2, welche die Netzwerkmanagementzentren NMC1 und NMC2 informiert, dass im Rahmen der Veto-Prozedur keine Änderung bezüglich der Durchführung der Operation erfolgt. Die Nachricht notifyOperationExecutedConfirmed enthält Identifikationsinformationen des Netzwerkmanagementzentrums NMC1 und der von dem Netzwerkmanagementzentrum NMC1 angeforderten Operation. Die Nachricht notifyOperationExecutedConfirmed entspricht dem Abschluss der Veto-Prozedur.

Gemäß dem unteren Teil der Figur 3 sendet das Netzwerkmanagementzentrum NMC2 die Nachricht objectOperation an das Betriebs- und Wartungszentrum OMC. Die Nachricht objectOperation enthält Identifikationsinformationen des Netzwerkmanagementzentrums NMC2 und Identifikationsinformationen der Operation, welcher widersprochen wird. Durch die Nachricht objectOperation fordert das Netzwerkmanagementzentrum NMC2, dass die bereits durchgeführte Operation rückgängig zu machen ist. Die Rückgängigmachung kann abhängig von der Art der Operation von dem Betriebs- und Wartungszentrum OMC, von dem Netzwerkmanagementzentrum NMC1 oder von dem Netzwerkmanagementzentrum NMC2 durchgeführt werden. Die Nachricht objectOperation kann gegebenenfalls Informationen darüber enthalten, von wem die Operation rückgängig zu machen ist. Es ist möglich, dass die Nachricht objectOperation einen oder mehrere Parameter enthält, welche eine mehrere Alternative zu der Operation angeben, gegen welche das Netzwerkmanagementzentrum NMC2 keinen Widerspruch erheben würde, wie z.B. einen für das Netzwerkmanagementzentrum NMC2 akzeptablen Bereich von Werten für einen Parameter.

Das Betriebs- und Wartungszentrum OMC kann, in Figur 3 nicht dargestellt, auf die Nachricht objectOperation hin eine Antwortnachricht an das Netzwerkmanagementzentrum NMC2 senden mit einer Statusangabe betreffend die Nachricht objectOperation wie z.B. "erfolgreich", "Rückgängigmachen der Operation nicht möglich", "Frist zum Einlegen des Widerspruchs verpasst" usw.

Das Betriebs- und Wartungszentrum OMC sendet die Nachricht notifyOperationObjected an das Netzwerkmanagementzentrum NMC1, mit welcher dem Netzwerkmanagementzentrum NMC1 mitgeteilt wird, dass gegen die bereits durchgeführte Operation Einspruch erhoben wurde. Vorzugsweise enthält die Nachricht notifyOperationObjected neben Identifikationsinformationen der Operation Informationen darüber, dass das Netzwerkmanagementzentrum NMC2 der Operation widersprochen hat, und gegebenenfalls darüber, wer für das Rückgängigmachen der Operation zuständig ist. Weiterhin können die gegebenenfalls in der Nachricht objectOperation enthaltenen von dem Netzwerkmanagementzentrum NMC2 vorgeschlagenen Alternativen zu der abgelehnten Operation in der Nachricht notifyOperationRequestedAborted aufgezählt werden.

Je nach Art der durchgeführten Operation und/oder abhängig von der diesbezüglichen Angabe in der Nachricht objectOperation wird die Operation von dem Betriebs- und Wartungszentrum OMC, dem Netzwerkmanagementzentrum NMC1 oder dem Netzwerkmanagementzentrum NMC2 rückgängig gemacht. Das Betriebs- und Wartungszentrum OMC sendet eine Nachricht notifyOperationExectuedUndone an die beiden Netzwerkmanagementzentren NMC1 und NMC2, mittels welcher angezeigt wird, dass die durch ihre Identifikationsinformationen spezifizierte Operation rückgängig gemacht wurde. Gegebenenfalls kann die Nachricht notifyOperationExectuedUndone Informationen darüber enthalten, dass das Netzwerkmanagementzentrum NMC2 der Durchführung der Operation widersprochen hat, und/oder wer die Rückgängigmachung durchgeführt hat. Die Nachricht notifyOperationExectuedUndone entspricht dem Abschluss der Veto-Prozedur.

Im Gegensatz zu dem Vorgehen der Figur 2 wird bei dem asynchronen Vorgehen der Figur 3 eine geforderte Operation durchgeführt, bevor die Veto-Prozedur bezüglich dieser Operation gestartet wird. Dies hat zur Folge, dass im Falle einer Widerspruchseinlegung im Rahmen der Veto-Prozedur die bereits durchgeführte Operation rückgängig gemacht werden muss. Die Auswahl zwischen den beiden Vorgehensweisen der Figuren 2 und 3 kann auf verschiedene Weisen erfolgen. Beispielsweise kann ein bestimmter Agent grundsätzlich die gleiche Vorgehensweise anwenden, oder auch eine der beiden Vorgehensweisen, abhängig von der Art der angeforderten Operation. Vorzugsweise enthält die Nachricht OperationRequest des die Operation anfordernden Managers einen Parameter, welcher dem Agenten mitteilt, ob bei der Veto-Prozedur die synchrone oder die asynchrone Vorgehensweise anzuwenden ist.

Vorzugsweise vergibt das Netzwerkmanagementzentrum NMC2 bei Versendung der Nachricht objectOperation eine Identifikationsinformation dieses Widerspruchs, welche in die Nachricht objectOperation eingefügt wird. Hierdurch kann bei Bedarf zu einem späteren Zeitpunkt auf einen bestimmten Widerspruch Bezug genommen werden.

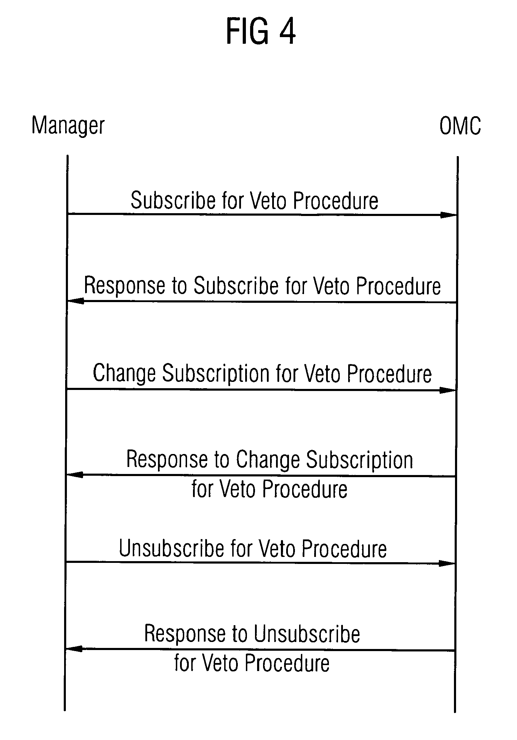

In den Figuren 2 und 3 ist der Fall dargestellt, dass lediglich das Netzwerkmanagementzentrum NMC2 die Möglichkeit erhält, Widerspruch gegen eine von dem Netzwerkmanagementzentrum NMC1 geforderte Operation einzulegen. Im allgemeinen können jedoch mehrere Manager die Möglichkeit zur Teilnahme an der Veto-Prozedur erhalten. Hierzu werden die Nachrichten, welche das Betriebs- und Wartungszentrum OMC gemäß den Figuren 2 und 3 an das Netzwerkmanagementzentrum NMC2 sendet, an eine Mehrzahl von Managern gesendet. Weiterhin wartet das Betriebs- und Wartungszentrum OMC nach Versendung der Nachricht notifyOperationRequested im Fall der Figur 2 bzw. der Nachricht notifyOperationExecuted im Fall der Figur 3 für jeden Manager der Mehrzahl ab, ob innerhalb der bestimmten Zeitspanne ein Einspruch erfolgt. Bei der Mehrzahl handelt es sich um Manager, welche dem Betriebs- und Wartungszentrum OMC zuvor signalisiert haben, dass sie an der Veto-Prozedur teilnehmen möchten. Hierzu kann ein Subskriptionsverfahren verwendet werden, welches im folgenden anhand von Figur 4 näher erläutert wird.

Ein Manager MANAGER sendet an das Betriebs- und Wartungszentrum OMC eine Nachricht SubscribeForVetoProcedure, welche dem Betriebs- und Wartungszentrum OMC anzeigt, dass der Manager MANAGER an der Veto-Prozedur teilnehmen möchte. In der Nachricht SubscribeForVetoProcedure werden diejenigen Operationen, bezüglich welcher der Manager MANAGER an der Veto-Prozedur Interesse hat, spezifiziert. Dies kann z.B. durch die Angabe von Operationstypen, so z.B. Delete-Operationen, und/oder von anderen Managern, welche die jeweiligen Operationen anfordern, erfolgen. So hat beispielsweise die Nennung von "MANAGER 1" zur Folge, dass der Manager MANAGER für alle von dem MANAGER 1 geforderten Operationen in die Veto-Prozedur einbezogen wird. Die Nennung von Delete-Operationen ohne die Verknüpfung mit einem Manager hat zur Folge, dass der Manager MANAGER für alle Delete-Operationen in die Veto-Prozedur einbezogen wird, unabhängig davon, welcher Manager die Delete-Operationen anfordert. Auch durch eine Angabe von Netzelementen und/oder Daten, welche von den Operationen betroffen sein sollen, können die Operationen, in Bezug auf welche der Manager MANAGER an der Veto-Prozedur beteiligt sein möchte, spezifiziert werden. So kann der Manager MANAGER beispielsweise angeben, dass er an allen Operationen interessiert ist, welche eine beliebige der Basisstationen, welche von einem bestimmten RNC (Radio Network Controller) gesteuert wird, betreffen. Weiterhin enthält die Nachricht SubscribeForVetoProcedure Identifikationsinformationen des Managers MANAGER, sowie Identifikationsinformationen der Subskription, welche bei einer Änderung der Subskription wiederverwendet wird.

Auf die Nachricht SubscribeForVetoProcedure antwortet das Betriebs- und Wartungszentrum OMC mit der Nachricht ResponsetoSubscribeForVetoProcedure, welche einen Status angibt. Dieser lautet "erfolgreich", wenn das Betriebs- und Wartungszentrum OMC die Subskription gemäß den Anforderungen der Nachricht SubscribeForVetoProcedure einrichten konnte. Ansonsten kann die Angabe erfolgen, dass und/oder inwiefern und/oder aus welchem Grund die Subskription nicht gemäß den Anforderungen der Nachricht SubscribeForVetoProcedure eingerichtet werden konnte. Die Nachricht ResponsetoSubscribeForVetoProcedure enthält weiterhin die Identifikationsinformationen des Managers MANAGER und der Subskription aus der Nachricht SubscribeForVetoProcedure.

Bei Bedarf kann der Manager MANAGER eine zuvor aufgrund der Versendung der Nachricht SubscribeForVetoProcedure eingerichtete Subskription ändern, indem er eine Nachricht ChangeSubscriptionForVetoProcedure an das Betriebs- und Wartungszentrum OMC sendet. Die Nachricht ChangeSubscriptionForVetoProcedure enthält neben den Identifikationsinformationen des Managers MANAGER und der Subskription der Nachricht SubscribeForVetoProcedure Angaben darüber, inwiefern die Subskription geändert werden soll. Hierbei kann sowohl in Bezug auf Operationstypen als auch auf die Operationen anfordernde Manager eine Veränderung, ein Hinzufügen oder ein Löschen erfolgen.

Das Betriebs- und Wartungszentrum OMC antwortet auf den Empfang der Nachricht ChangeSubscriptionForVetoProcedure mit einer Nachricht ResponsetoChangeSubscriptionForVetoProcedure, welche einen Status angibt. Dieser lautet "erfolgreich", wenn das Betriebs- und Wartungszentrum OMC die Subskription gemäß den Anforderungen der Nachricht SubscribeForVetoProcedure verändern konnte. Ansonsten kann die Angabe erfolgen, dass und/oder inwiefern und/oder aus welchem Grund die Subskription nicht gemäß den Anforderungen der Nachricht SubscribeForVetoProcedure verändert werden konnte. Die Nachricht ResponsetoSubscribeForVetoProcedure enthält weiterhin die Identifikationsinformationen des Managers MANAGER und der Subskription aus der Nachricht ChangeSubscriptionForVetoProcedure.

Durch Versendung einer Nachricht UnsubscribeForVetoProcedure zeigt der Manager MANAGER dem Betriebs- und Wartungszentrum OMC an, dass seine Teilnehme an der Veto-Prozedur beendet werden soll. Dies hat zur Folge, dass dem Manager MANAGER im folgenden keine Nachrichten in Bezug auf von anderen Managern geforderte Operationen im Rahmen einer Veto-Prozedur gesendet werden, der jeweilige Manager kann somit diesen Operationen nicht mehre zustimmen oder sie ablehnen. Die Nachricht UnsubscribeForVetoProcedure enthält weiterhin die Identifikationsinformationen des Managers MANAGER und der Subskription aus der Nachricht SubscribeForVetoProcedure.

Das Betriebs- und Wartungszentrum OMC antwortet auf die Nachricht UnsubscribeForVetoProcedure mit einer Nachricht ResponsetoUnsubscribeForVetoProcedure welche einen Status angibt. Dieser lautet "erfolgreich", wenn das Betriebs- und Wartungszentrum OMC die Subskription gemäß den Anforderungen der Nachricht UnsubscribeForVetoProcedure löschen konnte. Ansonsten kann die Angabe erfolgen, dass und/oder inwiefern und/oder aus welchem Grund die Subskription nicht gemäß den Anforderungen der Nachricht UnsubscribeForVetoProcedure gelöscht werden konnte. Die Nachricht ResponsetoUnsubscribeForVetoProcedure enthält weiterhin die Identifikationsinformationen des Managers MANAGER und der Subskription aus der Nachricht UnsubscribeForVetoProcedure, so dass die Nachricht ResponsetoUnsubscribeForVetoProcedure der Nachricht UnsubscribeForVetoProcedure zugeordnet werden kann.

Gemäß dem anhand von Figur 4 erläuterten SubskriptionsVerfahren meldet sich ein Manager vor der Durchführung der erfindungsgemäßen Veto-Prozedur an, bevor er im Rahmen der Veto-Prozedur Einspruch gegen von anderen Managern geforderte Operationen einlegen kann. Auf diese Weise ist dem Agent bekannt, welcher Manager gemäß der Veto-Prozedur zu benachrichtigen ist, wenn ein bestimmter Manager die Durchführung einer bestimmten Operation fordert. Hierdurch wird ein unnötiger Nachrichtenaustausch vermieden, welcher entstehen würde, wenn der Agent jeden mit ihm verbundenen Manager unabhängig von der jeweiligen Subskription bei jeder eingehenden Operation benachrichtigen müsste.

Ein Beispiel für eine Operation, bei welcher sich die Anwendung der erfindungsgemäßen Veto-Prozedur besonders anbietet, ist eine Operation, gemäß welcher die Schnittstelle zwischen dem Agent und allen mit ihm verbundenen Managern für eine bestimmte Zeitspanne unterbrochen wird. So kann beispielsweise ein erster Manager den Agent mit dieser Operation auffordern, die Schnittstelle zu ihm und zu den zu ihm parallelen Managern mit dem Agenten verbundenen Managern zeitweise abzubrechen. Dies kann bei einem zweiten Manager, welcher von dem Abbruch betroffen würde, zu Schwierigkeiten führen, wenn dieser aktuell auf den Nachrichtenaustausch zwischen ihm und dem Agenten angewiesen ist. Der zweite Manager kann dem Agent entweder gemäß des synchronen Ablaufs der Figur 2 oder gemäß des asynchronen Ablaufs der Figur 3 mitteilen, dass er mit einer Abschaltung der Schnittstelle nicht einverstanden ist. Der erste Agent, welchem das Nichteinverständnis des zweiten Managers und die daraus resultierende Nicht-Durchführung der von ihm geforderten Operation mitgeteilt wird, kann die Operation zu einem späteren Zeitpunkt erneut an den Agenten senden. Zu diesem späteren Zeitpunkt ist der zweite Manager gegebenenfalls nicht mehr auf das Funktionieren der Kommunikation zwischen ihm und dem Agenten angewiesen, so dass dieser nunmehr der Durchführung der Abschaltung der Schnittstelle zustimmt.

Es ist möglich, dass die anhand der Figuren 2 bis 4 beschriebenen Nachrichten weitere Bestandteile als die erläuterten umfassen bzw. weitere Funktionen als die erläuterten ausüben.

Weiterhin ist es möglich, dass einzelne Bestandteile dieser Nachrichten in Abweichung zu obigen Erläuterungen entfallen. Auch kann die Veto-Prozedur durchgeführt werden, wenn einzelne der in den Figuren 2 bis 4 dargestellten Nachrichten nicht verwendet werden.

Die verschiedenen Manager erfüllen in der Regel verschiedene Funktionen in Bezug auf das Management des gemanagten Systems. Es ist jedoch möglich, dass im Grenzbereich zwischen den Zuständigkeiten verschiedener Manager von einem Manager angeforderte Operationen zu Problemen bei anderen Managern führen. Ein Beispiel hierfür sind Konfigurationsänderungen, d.h. die Überarbeitung / Löschung / Hinzufügung von Daten in Bezug auf den Agenten oder in Bezug auf dem Agenten untergeordnete Agenten.

Gemäß der Erfindung dient ein Agent Managern im Konfliktfall als Relaystation, wodurch eine direkte Kommunikation zwischen den parallelen Managern vermieden wird.

## Patentansprüche

1. Verfahren zum Betreiben eines Managementsystems,
welches zumindest einen Agenten (OMC) und einen ersten mit dem Agenten (OMC) verbundenen Manager (NMC1) und einen zweiten mit dem Agenten (OMC) verbundenen Manager (NMC2) umfasst,
bei dem der Agent (OMC) von dem ersten Manager (NMC1) eine Aufforderung (OperationRequest) zur Durchführung einer Operation empfängt,
**dadurch gekennzeichnet,**
**dass** der Agent (OMC) an den zweiten Manager (NMC2) eine Benachrichtigung (notifyOperationRequested, notifyOperationExecuted) mit Informationen über die Operation sendet, und im Anschluss
von dem zweiten Manager (NMC2) eine Antwortnachricht (acceptOperation, objectOperation) mit einer Zustimmung oder einer Ablehnung der Operation empfängt.

2. Verfahren nach Anspruch 1, bei dem
der Agent (OMC) die Benachrichtigung (notifyOperationRequested) mit Informationen über die Operation vor Durchführung der Operation an den zweiten Manager (NMC2) sendet.

3. Verfahren nach Anspruch 2, bei dem
der Agent (OMC)
• eine Antwortnachricht (acceptOperation) mit einer Zustimmung empfängt,
oder
• anstelle einer Antwortnachricht (acceptOperation, objectOperation) keine Antwortnachricht (acceptOperation, objectOperation) innerhalb einer bestimmten Zeitspanne nach Versendung der Benachrichtigung (notifyOperationRequested) empfängt,
und daraufhin die Operation durchführt.

4. Verfahren nach Anspruch 3, bei dem
der Agent (OMC) den ersten Manager (NMC1) und den zweiten Manager (NMC2) über die Durchführung der Operation informiert.

5. Verfahren nach Anspruch 2, bei dem
der Agent (OMC)
• eine Antwortnachricht (objectOperation) mit einer Ablehnung empfängt,
oder
• anstelle einer Antwortnachricht (acceptOperation, objectOperation) keine Antwortnachricht (acceptOperation, objectOperation) innerhalb einer bestimmten Zeitspanne nach Versendung der Benachrichtigung (notifyOperationRequested) empfängt,
und daraufhin die Durchführung der Operation unterlässt.

6. Verfahren nach Anspruch 5, bei dem
der Agent (OMC) den ersten Manager (NMC1) über die Antwortnachricht (objectOperation) mit der Ablehnung informiert.

7. Verfahren nach Anspruch 1, bei dem
der Agent (OMC) die Benachrichtigung (notifyOperationExecuted) mit Informationen über die Operation nach Durchführung der Operation an den zweiten Manager (NMC2) sendet.

8. Verfahren nach Anspruch 7, bei dem
der Agent (OMC)
• eine Antwortnachricht (objectOperation) mit einer Ablehnung empfängt,
oder
• anstelle einer Antwortnachricht (acceptOperation, objectOperation) keine Antwortnachricht (acceptOperation, objectOperation) innerhalb einer bestimmten Zeitspanne nach Versendung der Benachrichtigung (notifyOperationExecuted) empfängt,
und daraufhin die Operation rückgängig gemacht wird.

9. Verfahren nach Anspruch 8, bei dem
die Antwortnachricht (objectOperation) mit der Ablehnung Informationen darüber enthält, durch wen die Operation rückgängig zu machen ist.

10. Verfahren nach 5 oder 6 oder 8 oder 9, bei dem
die Antwortnachricht (objectOperation) mit der Ablehnung Angaben zu mindestens einer von dem ersten Manager (NMC1) anstelle der Operation verwendbaren Operation umfasst.

11. Verfahren nach einem der Ansprüche 1 bis 10, bei dem
die Aufforderung (OperationRequest) zur Durchführung der Operation Informationen darüber umfasst,
ob die Benachrichtigung (notifyOperationRequested, notifyOperationExecuted) mit Informationen über die Operation vor oder nach der Durchführung der Operation zu senden ist, und/oder
ob keine Versendung einer Antwortnachricht (acceptOperation, objectOperation) durch den zweiten Manager (NMC2) von dem Agenten (OMC) als Zustimmung oder Ablehnung zu werten ist.

12. Verfahren zum Betreiben eines Managementsystems,
welches zumindest einen Agenten (OMC) und einen ersten mit dem Agenten (OMC) verbundenen Manager (NMC1) und einen zweiten mit dem Agenten (OMC) verbundenen Manager (NMC2) umfasst,
**dadurch gekennzeichnet,**
**dass** der zweite Manager (NMC2) von dem Agenten (OMC) eine Benachrichtigung (notifyOperationRequested, notifyOperationExecuted) mit Informationen über eine Operation empfängt, zu deren Durchführung der erste Manager (NMC1) den Agenten (OMC) zuvor aufgefordert hat, und
**dass** im Anschluss der zweite Manager (NMC2) eine Antwortnachricht (acceptOperation) mit einer Zustimmung oder einer Ablehnung der Operation an den Agenten (OMC) sendet.

13. Verfahren nach Anspruch 12, bei dem
der zweite Manager (NMC2) eine Antwortnachricht (objectOperation) mit einer Ablehnung sendet mit Informationen darüber, durch wen die Operation rückgängig zu machen ist.

14. Verfahren nach Anspruch 12 oder 13, bei dem
der zweite Manager (NMC2) eine Antwortnachricht (objectOperation) mit einer Ablehnung sendet mit Angaben zu mindestens einer von dem ersten Manager (NMC1) anstelle der Operation verwendbaren Operation.

15. Verfahren nach Anspruch 12, bei dem
der zweite Manager (NMC2) eine Antwortnachricht (acceptOperation) mit einer Zustimmung sendet, und im Anschluss eine Nachricht zur Information über die Durchführung der Operation von dem Agenten (OMC) empfängt.

16. Verfahren zum Betreiben eines Managementsystems,
welches zumindest einen Agenten (OMC) und einen ersten mit dem Agenten (OMC) verbundenen Manager (NMC2) und einen oder mehrere weitere mit dem Agenten (OMC) verbundene Manager (NMC1) umfasst,
**dadurch gekennzeichnet,**
**dass** der Agent (OMC) von dem ersten Manager (NMC2) eine Nachricht (SubscribeForVetoProcedure, ChangeSubscriptionForVetoProcedure, UnsubscribeForVetoProcedure) empfängt zur Anforderung von Informationen über Operationen, zu deren Durchführung ein weiterer Manager (NMC1) den Agenten (OMC) auffordert.

17. Verfahren zum Betreiben eines Managementsystems,
welches zumindest einen Agenten (OMC) und einen ersten mit dem Agenten (OMC) verbundenen Manager (NMC2) und einen oder mehrere weitere mit dem Agenten (OMC) verbundene Manager (NMC1) umfasst,
**dadurch gekennzeichnet,**
**dass** der erste Manager (NMC2) an den Agenten (OMC) eine Nachricht (SubscribeForVetoProcedure, ChangeSubscriptionForVetoProcedure, UnsubscribeForVetoProcedure) sendet zur Anforderung von Informationen über Operationen, zu deren Durchführung ein weiterer Manager (NMC1) den Agenten (OMC) auffordert.

18. Verfahren nach Anspruch 16 oder 17, bei dem
die Nachricht (SubscribeForVetoProcedure, ChangeSubscriptionForVetoProcedure, UnsubscribeForVetoProcedure) eine Angabe einer oder mehrerer Operationsarten umfasst, auf welche sich die Anforderung von Informationen bezieht.

19. Verfahren nach einem der Ansprüche 16 bis 18, bei dem
die Nachricht (SubscribeForVetoProcedure, ChangeSubscriptionForVetoProcedure, UnsubscribeForVetoProcedure) eine Angabe einer oder mehrerer der weiteren Manager (NMC1) umfasst, und sich die Anforderung von Informationen auf Operationen bezieht, zu deren Durchführung dieser oder diese weiteren Manager (NMC1) den Agenten (OMC) auffordern.

20. Verfahren nach einem der Ansprüche 16 bis 19, bei dem
die Nachricht (SubscribeForVetoProcedure, ChangeSubscriptionForVetoProcedure, UnsubscribeForVetoProcedure) eine Angabe einer oder mehrerer Einrichtungen und/oder Daten umfasst, und sich die Anforderung von Informationen auf Operationen bezieht, welche diese Einrichtungen und/oder Daten betreffen.

21. Agent (OMC) für ein Managementsystem,
welches zumindest den Agenten (OMC) und einen ersten mit dem Agenten (OMC) verbundenen Manager (NMC1) und einen zweiten mit dem Agenten (OMC) verbundenen Manager (NMC2) umfasst,
mit Mitteln zum Empfangen und Auswerten einer Aufforderung (OperationRequest) zur Durchführung einer Operation von dem ersten Manager (NMC1),
**gekennzeichnet durch**
Mittel zum Versenden einer Benachrichtigung (notifyOperationRequested, notifyOperationExecuted) mit Informationen über die Operation an den zweiten Manager (NMC2), und
Mittel zum Empfangen und Auswerten einer Antwortnachricht (acceptOperation, objectOperation) von dem zweiten Manager (NMC2) mit einer Zustimmung oder einer Ablehnung der Operation.

22. Agent (OMC) für ein Managementsystem,
welches zumindest den Agenten (OMC) und einen ersten mit dem Agenten (OMC) verbundenen Manager (NMC2) und einen oder mehrere weitere mit dem Agenten (OMC) verbundene Manager (NMC1) umfasst,
**gekennzeichnet durch**
Mittel zum Empfangen und Auswerten einer Nachricht (SubscribeForVetoProcedure, ChangeSubscriptionForVetoProcedure, UnsubscribeForVetoProcedure) von dem ersten Manager (NMC2) zur Anforderung von Informationen über Operationen, zu deren Durchführung ein weiterer Manager (NMC1) den Agenten (OMC) auffordert.

23. Manager (NMC2) für ein Managementsystem,
welches zumindest einen Agenten (OMC) und den mit dem Agenten (OMC) verbundenen Manager (NMC2) und einen weiteren mit dem Agenten (OMC) verbundenen Manager (NMC1) umfasst,
**gekennzeichnet durch**
Mittel zum Empfangen und Auswerten einer Benachrichtigung (notifyOperationRequested, notifyOperationExecuted) von dem Agenten (OMC) mit Informationen über eine Operation, zu deren Durchführung der weitere Manager (NMC1) den Agenten (OMC) zuvor aufgefordert hat, und
Mittel zum Senden einer Antwortnachricht (acceptOperation, objectOperation) an den Agenten (OMC) mit einer Zustimmung oder einer Ablehnung der Operation.

24. Manager (NMC2) für ein Managementsystem,
welches zumindest einen Agenten (OMC) und den mit dem Agenten (OMC) verbundenen Manager (NMC2) und einen oder mehrere weitere mit dem Agenten (OMC) verbundene Manager (NMC1) umfasst,
**gekennzeichnet durch**
Mittel zum Versenden einer Nachricht (SubscribeForVetoProcedure, ChangeSubscriptionForVetoProcedure, UnsubscribeForVetoProcedure) an den Agenten (OMC) zur Anforderung von Informationen über Operationen, zu deren Durchführung ein weiterer Manager (NMC1) den Agenten (OMC) auffordert.
